# EUROPÄISCHE PATENTSCHRIFT

(11) **EP 3 770 351 B1**
(45) Veröffentlichungstag und Bekanntmachung des Hinweises auf die Patenterteilung: **23.03.2022**
(21) Anmeldenummer: 20185872.7
(22) Anmeldetag: 15.07.2020
(51) Int. Cl.: E03D 11/14, E03C 1/322, F16B 21/06, F16B 19/10, F16B 21/16

(54) **BEFESTIGUNGSSYSTEM ZUR WANDBEFESTIGUNG VON SANITÄRVORRICHTUNGEN**
FASTENING SYSTEM FOR FASTENING OF SANITARY DEVICES TO WALLS
SYSTÈME DE FIXATION PERMETTANT DE FIXER AU MUR DES DISPOSITIFS SANITAIRES

(30) Priorität: 24.07.2019 CH 9482019
(43) Veröffentlichungstag der Anmeldung: 27.01.2021
(73) Patentinhaber: Keramik Holding AG Laufen, CH-4242 Laufen (CH)
(72) Erfinder: Baier, Bernhard, 79730 Murg (DE)
(74) Vertreter: Bohest AG

(56) Entgegenhaltungen:
- EP-A1- 2 985 477
- WO-A1-2013/167186
- DE-A1-102012 218 339
- DE-U1-202016 008 748

## Beschreibung

Die Erfindung bezieht sich auf das Gebiet von Befestigungssystemen für Sanitärartikel, insbesondere von Sanitärartikeln aus Keramik, wie WC's.

Die Erfindung betrifft ein Befestigungssystem zur Wandmontage von Sanitärvorrichtungen, insbesondere zur Montage in freitragender Weise an einer im wesentlichen vertikalen Gebäudewand.

Bei der Befestigung schwerer und ausladender Gegenstände an Gebäudewänden ist eine zuverlässige Fixierung entscheidend. Beispielsweise kommen für Sanitärbecken, Toiletten, Bidets oder Urinale oftmals freitragende, bzw. ausschliesslich hängende Konstruktionen zum Einsatz. Neben einer sicheren Halterung soll eine einfache Montage möglich sein.

Ein solches Befestigungssystem ist beispielsweise aus der internationalen Patentveröffentlichung WO2013/167186 bekannt. Über ein Gehäuseelement, welches mit Verriegelungsmittel versehen ist, kann ein WC abnehmbar an einer Wand befestigt werden. Dabei werden die Verriegelungsmittel über entsprechend gestaltete Öffnungen in der Rückwand einer WC-Schüssel eingeschoben und mittels Verdrehung des Gehauselements an dieser befestigt. Das beschriebene Befestigungssystem ist dabei auf die individuell gestalteten Öffnungen der WC-Schüssel abgestimmt. Zudem ist aus DE 20 2016 008748 U1 ein Befestigungssystem zur Wandmontage einer Sanitärvorrichtung gemäss dem Oberbegriff des unabhängigen Patentanspruchs bekannt.

Es ist ein Bedürfnis ein Befestigungssystem zu schaffen, welches einen grossen Anwendungsbereich bietet und insbesondere Flexibilität in Bezug auf die Gestaltung der Sanitärvorrichtung erlaubt.

Die Erfindung betrifft ein Befestigungssystem zur Wandmontage von Sanitärvorrichtungen. Das Befestigungssystem umfasst ein Montageelement zum Einbringen in eine Befestigungswand der Sanitärvorrichtung, wobei das Montageelement an einem distalen Ende einen Aufnahmebereich aufweist. Das Befestigungssystem weist weiter einen Verriegelungsbolzen zur Aufnahme im Aufnahmebereich des Montageelements und einen Sicherungsstift auf, welcher in Wirkverbindung mit dem Verriegelungsbolzen steht und diesen im Montageelement sichert. Der Sicherungsstift greift dazu durch einen Durchgang in einem Gehäuse des Montageelements.

Das Montageelement umfasst ein hohlzylindrisches Gehäuse und ein darin eingebrachtes Verriegelungsteil. Das Verriegelungsteil ist relativ zum Gehäuse lateral bzw. radial bewegbar angeordnet, derart, dass das Verriegelungsteil von einer ersten Einführposition des Montageelements in eine zweite Verriegelungsposition des Montageelements bewegbar ist. Ein Aussenumfang eines Verriegelungselements des Verriegelungsteils steht in der Einführposition lateral bzw. radial nicht über einen Aussenumfang des Gehäuses vor. Das Verriegelungselement kann gegenüber dem Aussenumfang des Gehäuses zurückversetzt angeordnet sein. Vorzugsweise ist in der Einführposition ein Aussenumfang des Verriegelungselements bündig mit dem Aussenumfang des Gehäuses. Ein Aussenumfang des Verriegelungselements des Verriegelungsteils steht in der Verriegelungsposition lateral bzw. radial über den Aussenumfang des Gehäuses vor.

Das radial vorstehende Verriegelungselement bildet dabei einen axialen Anschlag entgegen einer Einführrichtung des Montageelements an der Rückseite der Befestigungswand und verhindert somit eine Ausführbewegung des Montageelements.

Wie das Befestigungssystem aus der internationalen Patentveröffentlichung WO2013/167186, kann auch das vorliegende Befestigungssystem einfach und in unkomplizierter Weise angewendet werden. Es weist wenige Einzelteile auf und ermöglicht eine zuverlässige Halterung der Sanitärvorrichtung an einer Wand. Zudem nimmt das erfindungsgemässe Befestigungssystem im wesentlichen keinen Einfluss auf die zu montierende Sanitärvorrichtung. Eine Sanitärvorrichtung mit herkömmlichen runden Öffnungen kann mittels des Befestigungssystems an einer Wand montiert werden. Andererseits kann eine Sanitärvorrichtung, welche typischerweise auf Keramik hergestellt ist, kostengünstig und einfach mit runden Öffnungen versehen werden.

Aufgrund des unabhängig vom Gehäuse bewegbaren Verriegelungsteils muss ein Gehäuse selber zur Verriegelung des Befestigungssystems nicht gedreht werden. Ein Montageelement kann entsprechend in jeder Rotationsposition an einer Sanitärvorrichtung angebracht werden. Dies bietet den Vorteil, dass beispielsweise ein Gehäuse derart ausgerichtet werden kann, um einen Zugang für einen von aussen anzubringenden Sicherungsstift optimal zu positionieren.

Ein lateral oder radial nach aussen Bewegen des Verriegelungsteils kann auf unterschiedliche Arten geschehen. Das Verriegelungsteil kann beispielsweise zumindest teilweise flexibel ausgebildet sein, separate, individuell bewegbare Elemente aufweisen oder aus separaten, individuell bewegbaren Elementen bestehen.

Das Verriegelungsteil kann beispielsweise elastisch verformbare oder flexibel verformbare Elemente, z.B. ein radial flexibel bewegbares Verriegelungselement aufweisen. Das Verriegelungselement kann beispielswese als radial nach aussen drückbares Federelement ausgestaltet sein. In einer Variante kann das Verriegelungselement als mehrere solcher Federelemente ausgestaltet sein.

Verriegelungsteil und Gehäuse können separate, voneinander abnehmbare Teile des Montagelements sein. Verriegelungsteil und Gehäuse können separate, aber fest miteinander verbundene Teile des Montagelements sein. Vorzugsweise sind Verriegelungsteil und Gehäuse separate Teile des Montageelements. Vorzugsweise sind Verriegelungsteil und Gehäuse abnehmbar aneinander angebracht, beispielweise ineinander geschoben, aneinander montiert oder aneinander befestigt.

Vorzugsweise weist das Verriegelungsteil zwei separate, vorzugsweise symmetrische, Halbelemente auf. In gewissen Ausführungsformen des Montageelements sind die Halbelemente als gleiche Halbelemente ausgebildet.

Vorzugsweise ist ein Verriegelungsteil länglich ausgebildet. An seinem einen Ende, am proximalen Ende, ist vorzugsweise das Verriegelungselement angebracht. Vorzugsweise wird ein proximales Ende des Verriegelungsteils durch das Verriegelungselement gebildet. Ein Aussenumfang des Verriegelungsteils ist vorzugsweise kreisförmig, insbesondere im Bereich des Verriegelungselements. Ein Aussenumfang kann jedoch auch andere Formen aufweisen, insbesondere ausserhalb des Bereichs des Verriegelungselements. Der Aussenumfang des Verriegelungsteils ausserhalb des Verriegelungselements ist vorzugsweise auf die Form der Innenseite des Gehäuses angepasst, vorzugsweise derart, dass Aussenseite Verriegelungselement und Innenseite Gehäuse zumindest mehrheitlich entlang der Länge des Verriegelungsteils bündig angeordnet sind.

Ein Verriegelungselement ist vorzugsweise ein als Radialvorsprung ausgestaltetes Element des Verriegelungsteils. Ein Verriegelungselement ist vorzugsweise als Kreis oder Scheibe ausgebildet. Weist das Verriegelungsteil zwei Halbelemente auf, können die beiden Halbelemente dann jeweils eine Hälfte des Verriegelungselements, vorzugsweise des Kreises oder der Scheibe, aufweisen. Ein Verriegelungselement kann auch andere Formen aufweisen. Beispielsweise kann ein Verriegelungselement in der Form eines einzelnen oder mehrerer separater radial nach aussen gerichteter Radialvorsprünge ausgestaltet sein.

An seinem anderen, distalen Ende, ist das Verriegelungsteil vorzugsweise konisch abgeschrägt, derart, dass eine Mulde im hinteren Teil des Verriegelungsteils gebildet wird. Das distale Ende des Verriegelungsteils kann Teil der Ausnahmeöffnung des Montageelements bilden. Der Verriegelungsbolzen wird bei Einschieben in die Aufnahmeöffnung auch in die Mulde des Verriegelungselements gedrückt. Aufgrund des Drucks des Verriegelungsbolzes auf das distale Ende, wird das Verriegelungsteil, mindestens jedoch das Verrieglungselement des Verriegelungsteils, radial nach aussen bewegt. Durch ein konisch geformtes Ende werden die Druckkräfte auch radial gerichtet, was ein laterales oder radiales Bewegen des Verriegelungsteils unterstützt.

Ausser explizit anders beschrieben oder offensichtlich anders zu interpretieren, beispielsweise aus technischen Gründen, werden die folgenden Begriffe in der Anmeldung wie folgt verwendet:
,Axial' wird hierin bezüglich einer Längsachse des Montageelements verwendet. ,Radial' bezieht sich entsprechend auf eine radiale Richtung bezüglich dieser oder einer Längssachse des Montageelements. 'Radial' schliesst auch 'lateral' ein, insbesondere bei nicht-runden oder nicht-zylindrischen Formen. Eine Einführrichtung und Ausführrichtung des Montageelements in eine Sanitärvorrichtung zur Montage des Montageelements an der Sanitärvorrichtung und zur Montage der Sanitärvorrichtung an einer Wand, verläuft in Richtung der Längsachse des Montageelements.

,Proximal' wird hierin für eine Position oder eines Elements des Befestigungssystems verwendet, welches zu einer Sanitärvorrichtung zeigt oder zu dieser gerichtet ist. 'Distal' ist zu 'proximal' entgegengesetzt und wird für eine Position oder ein Element verwendet, welches zu einer Wand zeigt oder zu dieser gerichtet ist, an welcher Wand die Sanitärvorrichtung befestigt ist oder befestigt werden soll.

Das Verriegelungsteil und das Gehäuse des Montageelements sind zumindest in einer Richtung gegen ein axiales Verschieben relativ zueinander gesichert. Vorzugsweise sind das Verriegelungsteil und das Gehäuse des Montageelements in beide Richtungen, eine Einführrichtung und eine Ausführrichtung, gegen ein axiales Verschieben relativ zueinander gesichert.

Das Montageelement weist entsprechende Haltemittel auf. Vorzugsweise weisen Verriegelungsteil und Gehäuse zueinander korrespondierende Haltemittel auf. Diese können beispielsweise als aneinander geschobene Anschläge oder auch ineinander greifende Haltemittel ausgestaltet sein. Beispiele für korrespondierende Haltemittel sind Vorsprung und Aussparung oder Rille und Nut.

Haltemittel können in der Verriegelungsposition oder bereits in der Einführposition wirken. Vorzugsweise wirkt ein Haltemittel bereits in der Einführposition des Montageelements, d.h. ein axiales Verschieben relativ zueinander von Verriegelungsteil und Gehäuse ist bereits in der Einführposition durch das Haltemittel unterbunden.

Vorzugsweise ist das Montageelement in montiertem Zustand an einer Befestigungswand eines Sanitärartikels befestigt und insbesondere gegenüber einem Verschieben sowohl in Ausführrichtung, wie auch in Einführrichtung blockiert. Vorzugsweise bildet das Verriegelungselement zusammen mit einem Axialanschlag des Montageelements eine Blockierung des Montagelements in sowohl einer Einführrichtung, wie auch in einer Ausführrichtung.

Vorzugsweise weist das Gehäuse des Montageelements einen radial nach aussen weisenden Axialanschlag auf. Der Axialanschlag kann eine elastisch ausgebildete Schürze um den Aussenumfang des Gehäuses sein. Der Axialanschlag kann auch eine elastisch ausgebildete Schürze aufweisen. Eine Elastizität des Axialanschlags ermöglicht oder vereinfacht das Anbringen des Befestigungssystems an Sanitärvorrichtungen mit grösseren Toleranzen.

Vorzugsweise ist das Verriegelungselement an einem proximalen Ende des Gehäuses angeordnet und der Axialanschlag beabstandet zum Verriegelungselement angeordnet. Vorzugsweise entspricht ein Abstand zwischen Verriegelungselement und Axialanschlag im wesentlichen einer Dicke einer Befestigungswand der Sanitärvorrichtung oder einer Länge einer Durchgangsöffnung in der Befestigungswand der Sanitärvorrichtung in das das Montagelement eingeführt wird.

Vorzugsweise weist das Montagelement ein Löseelement auf. Ein Löseelement ist derart ausgestaltet und angeordnet, um ein Verschieben des Verriegelungsteils von der Verriegelungsposition zurück in eine Einführposition zu ermöglichen. Dabei ist das Löseelement vorzugsweise distal zu einem Axialanschlag angeordnet. Dies ermöglicht ein Bedienen des Löseelements von ausserhalb der Sanitärvorrichtung.

Das Löseelement ist vorzugsweise als mindestens ein, in einer Durchgangsöffnung in einer Gehäusewand des Gehäuses eingebrachtes, radial bewegbares Löseelement ausgebildet. Das Löseelement steht in Wirkverbindung mit dem Verriegelungsteil. Vorzugsweise wird das Löseelement durch Teile des Verriegelungsteils gebildet. Vorzugsweise ist ein Löseelement in einem distalen Bereich des Verriegelungsteils angeordnet. Vorzugsweise wird ein Löseelement durch ein distales Ende des Verriegelungsteils gebildet. Beispielsweise kann das Löseelement als verdicktes radial nach aussen vorstehendes distales Ende des Verriegelungsteils ausgebildet sein.

Ein Löseelement kann ein separates, vom Verriegelungsteil unabhängiges Element sein. Vorzugsweise ist das Löseelement Bestandteil des Verriegelungsteils. Ist das Verriegelungsteil aus mehreren Bestandteilen zusammengesetzt, so weist vorzugsweise jedes Bestandteil ein Löseelement auf.

Vorzugsweise sind Löseelement und Halteelement des Montageelements kombiniert. Das Halteelement dient dabei gleichzeitig als Löseelement. Umgekehrt wird durch das Löseelement das Verriegelungsteil am Gehäuse gehalten und gegen axiales Verschieben gegenüber dem Gehäuse gesichert.

Ist ein Halte- und Löseelement als Vorsprung im Verriegelungselement und korrespondierendem Durchgang im Gehäuse des Montageelements gebildet, so können diese Halte- und Löseelemente bereits in einer Einführposition ineinander Eingreifen. Das Verriegelungsteil wird dann durch die Halte- und Lösemittel beim Übergang der Einführposition zur Verrieglungsposition mit den Haltemitteln geführt.

Vorzugsweise wird das Befestigungssystem zum Anbringen einer Sanitärvorrichtung, vorzugsweise einer Toilette, an einer Wand verwendet.

Die Erfindung betrifft auch ein Verfahren zur Montage einer Sanitärvorrichtung an einer Wand mit einem Befestigungssystem gemäss der vorliegenden Erfindung und wie hierin beschrieben. Das Verfahren weist folgende Schritte auf:
- in einer Einführrichtung, Einführen des Montagelements in einer Einführposition des Montageelements in eine Durchgangsöffnung einer Befestigungswand der Sanitärvorrichtung bis zu einer Anschlagsposition des Montageelements an einer Befestigungsfläche der Befestigungswand,
- radial nach aussen Bewegen eines im Montageelement angeordneten Verriegelungsteils des Montagelements derart, dass ein Verriegelungselement des Verriegelungsteils an einer gegenüberliegenden Befestigungsfläche der Befestigungswand zu liegen kommt, dabei Bilden eines Axialanschlags in Ausführrichtung des Montageelements derart, dass das Montageelement relativ zur Sanitärvorrichtung axial blockiert wird.

Vorzugsweise wird ein radial nach aussen Bewegen des Verriegelungselements durch Einführen eines Verriegelungsbolzens in eine distale Aufnahmeöffnung des Montageelements ausgelöst und realisiert. Der Verriegelungsbolzen kann ein separater, zum Zweck der Verriegelung des Montagelements an der Sanitärvorrichtung vorgesehener Verriegelungsbolzen sein. Vorzugsweise bildet der Verriegelungsbolzen gleichzeitig einen Befestigungsbolzen in der Wand, an der die Sanitärvorrichtung montiert werden soll. Dazu ist der Bolzen mit seinem einen, distalen Ende in der Wand befestigt und mit seinem anderen, proximalen Ende im Montageelement eingebracht.

Durch das Einschieben des Verriegelungsbolzens wird das Verriegelungsteil radial nach aussen bewegt und dort gehalten. Dabei wird das Montagelement in eine Verriegelungsposition gebracht, in der die Verriegelungselemente die Befestigungswand hintergreifen.

Der Sicherungsstift wird nun durch einen Durchgang im Gehäuse in dieses und in eine Ausnehmung im Sicherungsbolzen eingebracht. Dadurch wird das Montageelement gegenüber Verdrehung gesichert. Durch eine vorzugsweise konisch gestaltete Ausnehmung im Verriegelungsbolzen wird das Montagelement zur Sanitärvorrichtung gezogen beziehungsweise die Sanitärvorrichtung zur Wand.

Das Prinzip dieses Befestigungsverfahrens mit Sicherungsstift ist in der WO2013/16786 beschrieben. Diese Schrift wird in diese Anmeldung mitaufgenommen, insbesondere betreffend das Befestigungsverfahren mit Sicherungsstift.

Das Montageverfahren kann des weiteren folgende Schritte aufweisen:
- Betätigen eines Löseelements des Montageelements, dabei radial nach innen Bewegen des Verrieglungsteils bis zur Einführposition des Montageelements, dabei Lösen der Verriegelung des Montageelements an der Befestigungswand der Sanitärvorrichtung;
- Ausführen des Montageelements aus der Öffnung in der Befestigungswand der Sanitärvorrichtung entgegen der Einführrichtung.

Vorteile und weitere Elemente des Verfahrens wurden bezüglich des Befestigungssystems beschrieben und werden nicht wiederholt.

Vorzugsweise stösst ein Axialanschlag in der Verriegelungsposition des Montageelements an einer Aussenseite der Befestigungswand, einer Befestigungsfläche des Sanitärartikels an. In der Verriegelungsposition hintergreift das Verriegelungselement die Befestigungswand an seiner Innenseite. Im montierten Zustand des Befestigungssystems stösst das Verriegelungselement an der Innenseite der Befestigungswand, einer gegenüberliegenden Befestigungsfläche an.

Vorzugsweise ist eine Länge desjenigen Teils des Montageelements, der aus der Befestigungsfläche ragt, kürzer oder gleich dem Abstand der Befestigungsfläche bis zu einer Abschlussfläche der Sanitärvorrichtung. Dabei entspricht die Abschlussfläche der Sanitärvorrichtung derjenigen Fläche der Sanitärvorrichtung, welche im montierten Zustand der Sanitärvorrichtung an der Wand anliegt.

Im Folgenden wird die Erfindung anhand von Figurenbespielen näher erläutert. Dabei zeigt:
- Fig. 1: eine schematische Darstellung einer Sanitärvorrichtung und eines Montagelements des Befestigungssystems;
- Fig. 2: eine perspektivische Ansicht eines Befestigungssystems in einer Einführposition;
- Fig. 3: eine perspektivische Ansicht des Befestigungssystems gemäss Fig. 2 in der Verriegelungsposition;
- Fig. 4, 5: eine Aufsicht auf einen horizontalen Längsschnitt (Fig. 4) und eine Seitenansicht eines vertikalen Längsschnitts (Fig. 5) durch ein montiertes Befestigungssystem;
- Fig. 6: Einzelteile einer Montagevorrichtung.

In den Figuren werden gleiche Referenzzeichen für gleiche oder ähnliche Elemente verwendet.

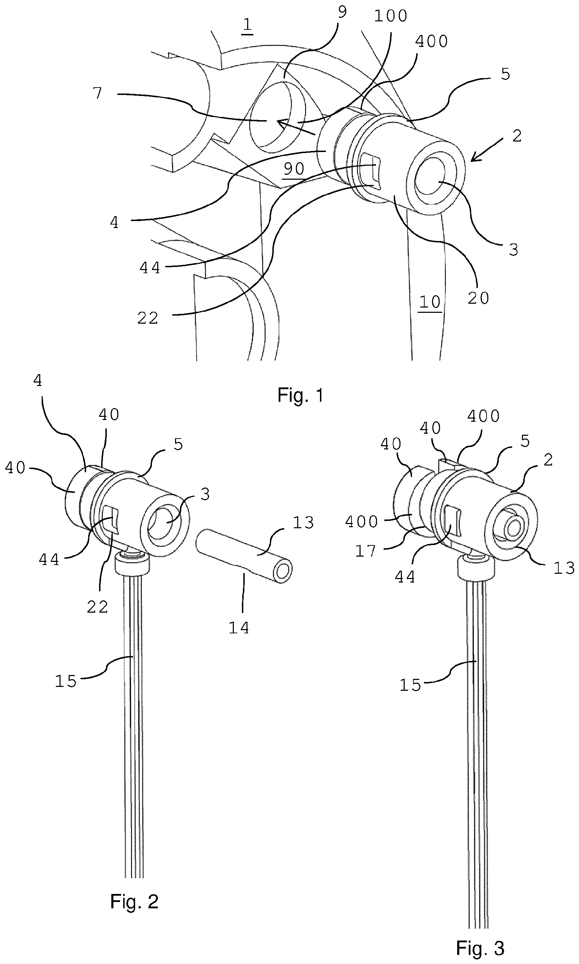

**Figur** 1 zeigt einen Ausschnitt einer Sanitärvorrichtung 1, beispielsweise eines WCs und ein Montageelement 2 zur Befestigung der Sanitärvorrichtung an einer Wand. Das Montageelement 2 ist hohlzylindrisch ausgebildet. Das eine Ende des Montagelements 2 weist zu seinem einen, distalen, Ende hin einen offenen Aufnahmebereich 3 auf. Im hohlzylindrischen Gehäuse 20 ist eine Öffnung vorgesehen (nicht gezeigt), die in das Innere des Aufnahmebereichs führt und ein Innengewinde aufweist. Die Öffnung dient als Durchgang für einen Sicherungsstift 15, wie nachfolgend genauer erläutert wird.

Im Gehäuse 20 des Montageelements 2 ist ein Lösedurchgang 22 vorgesehen. Darin ist ein Löseelement 44 von innerhalb des Montageelements eingebracht. Das Löseelement 44 ist von ausserhalb des Montageelements durch den Lösedurchgang 22 hindurch zugänglich. In Fig. 1, welche das Montageelement in der Einführposition zeigt, ist das Löseelement 44 zurückversetzt. Das Betätigen des Löseelements 44 erlaubt ein Lösen des Verriegelungsteils 4 und damit der Montagevorrichtung 2 von der Sanitärvorrichtung. Dies wird nachfolgend näher beschrieben.

Das Montagelement 2 weist an seinem anderen, proximalen, Ende, das in Richtung der Sanitärvorrichtung 1 weist, ein Verriegelungselement 400 eines Verriegelungsteils 4 auf.

Weiter weist das Montageelement 2 an seinem Aussenumfang eine umlaufende, im wesentlichen radial abstehende Schürze als Axialanschlag 5 an der Sanitärvorrichtung 1 auf.

Die Sanitärvorrichtung 1 weist eine kreisförmige Durchgangsöffnung 7 auf. Die Durchgangsöffnung 7 ist in einer Befestigungswand 9 der Sanitärvorrichtung 1 angeordnet. Die Befestigungswand 9 liegt einer Wand gegenüber, an der die Sanitärvorrichtung 1 befestigt werden soll.

Fig. 1 zeigt das Montageelement 2 mit dem Verriegelungsteil 4 vor der Durchgangöffnung 7, bereit zum Einschieben in die Durchgangsöffnung in Einführrichtung 100.

Die Sanitärvorrichtung 1 weist des weiteren eine Abschlussfläche 10 auf, die in montiertem Zustand der Sanitärvorrichtung an der Wand zu liegen kommt. Eine Befestigungsfläche 90 der Befestigungswand 9 ist relativ zur Abschlussfläche 10 vertieft, bzw. nach innen versetzt, an der Sanitärvorrichtung 1 vorgesehen.

In Fig. 1 ist die Aussenseite der Befestigungswand 9 sichtbar. Die Innenseite weist nach innen in die Sanitärvorrichtung 1 und eine gegenüberliegende Befestigungsfläche ist in der Figur entsprechend nicht sichtbar.

In den **Figuren 2 und 3** ist das Befestigungssystem gezeigt. Nebst des in Fig. 1 gezeigten Montageelements 2 weist das Befestigungssystem einen Sicherungsstift 15, sowie einen Verriegelungsbolzen 13 auf. In Fig. 2 ist das Befestigungssystem vor der Montage an einer Sanitärvorrichtung gezeigt. Das Verriegelungsteil 4 ist dabei in seiner Umfangsfläche bündig mit dem Aussenumfang des proximalen, einen Endes des Gehäuses 20. Der Verrieglungsbolzen 13 ist noch nicht in den Aufnahmebereich 3 des Montageelements 2 eingeschoben.

Wie in Fig. 3 zu sehen, ist das Verriegelungsteil 4 in der Form von zwei Elementhälften 40 ausgebildet. Fig. 3 zeigt das Befestigungssystem nach der Montage an einer Sanitärvorrichtung. Die Sanitärvorrichtung ist der Übersichtlichkeit wegen nicht dargestellt. Der Verriegelungsbolzen 13 ist in den Aufnahmebereich 3 eingeschoben. Dabei wurden die Elementhälften 40 des Verriegelungsteils 4 radial nach aussen geschoben. Zur vereinfachten Einführung und Zentrierung des Verriegelungsbolzens 13 ist der Aufnahmebereich 3 konisch ausgebildet und nach aussen in distaler Richtung aufgeweitet.

Die beiden Verriegelungselemente 400 der Elementhälften 40 weisen im montierten Zustand des Montageelements 2 radial nach aussen. Zwischen den Verriegelungselementen 400 und dem Axialanschlag 5 wird so ein Zwischenraum 17 gebildet. Der Zwischenraum 17 weist in etwa die Breite einer Befestigungswand 9 bzw. die Länge der Durchgangsöffnung 7 in der Befestigungswand 9 einer Sanitärvorrichtung auf. Das Montageelement 2 ist durch den Axialanschlag 5 und durch die Verriegelungselemente 400 gegen ein axiales Verschieben sowohl in die Einführrichtung des Montageelements 2, sowie in die Ausführrichtung des Montageelements 2 gesichert.

Das Löseelement 44 ist durch ein distales Ende des Verriegelungsteils 4, als radial nach aussen vorstehender Vorsprung gebildet. Der Vorsprung greift von innerhalb des Gehäuses 20 in den Lösedurchgang 22 im Gehäuse 20 ein. Vorzugsweise weisen beide Elementhälften 40 ein Löseelement 44 an ihrem distalen, aussenseitigen Ende auf. Das Montageelement 2, wie in Fig. 2 und Fig. 3 gezeigt, weist entsprechend zwei gegenüberliegende Löseelemente 44 auf.

Das Löseelement 44 hat die Funktion das Verriegelungsteil 4 im Gehäuse 20 gegenüber einer axialen Verschiebung zu halten. Zudem können durch ein radial nach innen gerichtetes Verschieben der Löseelemente 44, die Elementhälften 40, insbesondere die Verriegelungselemente 400, wieder in die Einführposition gebracht werden. Dies kann beispielsweise durch ein nach innen Drücken der Löseelemente 44 durch den Lösedurchgang 22 geschehen. Die Einführposition entspricht dann einer Ausführposition in welcher das Montageelement 2 von der Sanitärvorrichtung 1 entfernt werden kann. So gestaltete Löseelemente 44 sind vorteilhaft, wenn ein Verriegelungsteil 4 lösbar mit der Sanitärvorrichtung 1, beziehungsweise die Sanitärvorrichtung 1 lösbar mit einer Wand verbunden werden soll.

Der Sicherungsstift 15 greift radial durch das Gehäuse 20 in eine Vertiefung 14 des Verriegelungsbolzens 13 ein. Dies bewirkt ein Klemmen des Montageelements 2 in der Befestigungswand 9 und sichert das Montageelement 2 gegen Verdrehen wie nachfolgend anhand einer Querschnittszeichnung gezeigt ist.

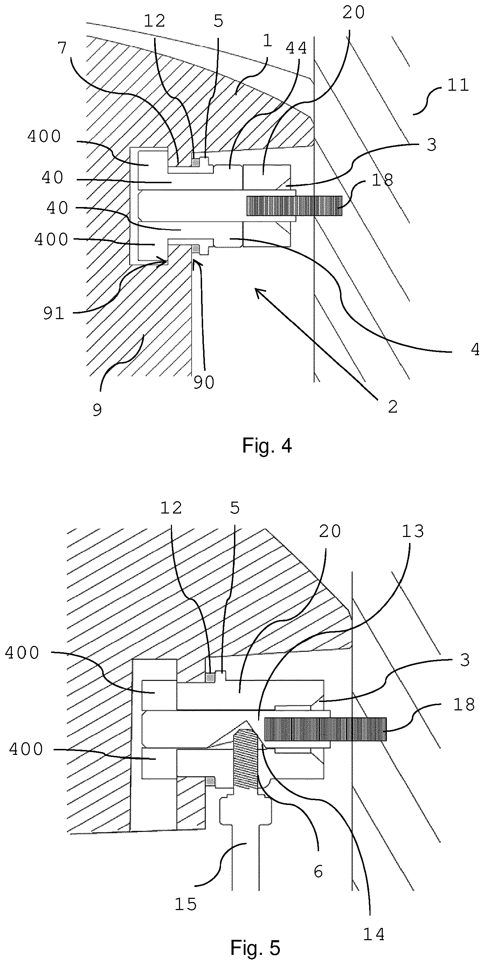

In den **Figuren 4 und 5** ist die Sanitärvorrichtung 1 mit dem Befestigungssystem in einem an einer Wand 11 montierten Zustand gezeigt. Hierfür wurde das Montageelement 2 vorab in einer Einführposition in die Befestigungswand 9 eingebracht. Fig. 4 zeigt eine Aufsicht auf einen Längsschnitt in horizontaler Richtung bezüglich einer montierten Sanitärvorrichtung. Fig. 5 zeigt eine Seitenansicht eines Längsschnitts in vertikaler Richtung bezüglich einer montierten Sanitärvorrichtung.

Das Montageelement 2 wird soweit in die Befestigungswand 9 eingeschoben, bis der Axialanschlag 5 gegen den Rand der Durchgangsöffnung 7 und an die Befestigungsfläche 90 der Befestigungswand 9 schlägt. Dadurch wird die Einführbewegung in der Einführrichtung blockiert. Der als umlaufende Schürze ausgebildete Axialanschlag 5 ist mit einem elastischen Material 12 versehen. Damit wird der Axialanschlag 5 gedämpft und weist eine gewisse Toleranz in Bezug auf die Einführtiefe des Montageelements 2 auf.

Anschliessend wird das Verriegelungsteil 4 relativ zum Gehäuse 20 radial nach aussen bewegt und von der Einführposition in eine Verriegelungsposition gebracht. Dabei kommen die Verriegelungselemente 400 hinter die Befestigungswand 9 an der gegenüberliegenden Befestigungsfläche 91 zu liegen. Die Verriegelungselemente 400 liegen an der Innenseite der Befestigungswand 9 an, wobei die gegenüberliegende Befestigungsfläche 91 einen Verriegelungsanschlag für die Verriegelungselemente 400 bildet. Die Verriegelungselemente 400 blockieren somit eine Bewegung des Montageelements 2 entgegen der Einführrichtung.

Das Verriegelungsteil 4 ist durch die Löseelemente 44 gegenüber axialer Verschiebung im Gehäuse 20 des Montageelements 2 gesichert.

Der Abstand des Axialanschlags 5 und der Verriegelungselemente 400 entspricht im wesentlichen der Dicke der Befestigungswand 9. Das Montageelement 2 sitzt nun gesichert leicht beweglich resp. flexibel in der Sanitärvorrichtung 1.

Die an der Umfangsflache des Montageelements 2 zwischen Axialanschlag 5 und den Verriegelungselementen 400 angebrachten elastische Ausgleichselemente 12 können zur Positionierung resp. Führung des Montageelements 2 vorgesehen sein. Die Ausgleichselemente 12 liegen in eingeführtem Zustand des Montageelements 2 an der Befestigungsfläche 9 um die Durchgangsöffnung 7 herum an.

Weiter ist in Fig. 4 die Wand 11 gezeigt, aus der der Verriegelungsbolzen 13 in Richtung der Sanitärvorrichtung 1 ragt. Der Verriegelungsbolzen 13 kann unmittelbar in der Wand 11 befestigt sein oder, z. B. wie in den Figuren gezeigt, mit einer Schraubverbindung, auf einem in der Wand verankerten Gegenstück 18 befestigt werden. Der Verriegelungsbolzen 13 ist in den Aufnahmebereich 3 des Montageelements 2 eingeschoben.

In der dargestellten Ausführungsform des Montageelements 2 ist der Bolzen 13 bis zu den Verriegelungselementen 400 vorgeschoben und bündig mit dem proximalen Ende des Montageelements angeordnet. Die zwei Elementhälften 40 des Verriegelungsteil 4 werden dabei auf ihrer gesamten Länge gleichmässig beabstandet gehalten. Ein Verkanten der Elementhälften 40 im Gehäuse 20 wird verhindert. Zudem werden die Verriegelungselemente 400 stabil in der Verriegelungsposition gehalten.

Wie in Fig. 5 im seitlichen Längsschnitt gezeigt zu sehen, weist der Verriegelungsbolzen 13 seitlich am Aussenumfang eine konische Vertiefung 14 auf.

Der Aufnahmebereich 3 der Montagevorrichtung ist an seinem zum Bolzen 13 hin offenen Ende konisch aufgeweitet, um das Einschieben des Verriegelungsbolzens 13 zu erleichtern. Ebenso sind die distalen Enden des Verriegelungsteils 4 leicht konisch aufgeweitet. Durch das Einschieben des Verriegelungsbolzens 13 in die Aufnahmeöffnung werden die Elementhälften 40 des Verriegelungsteils radial nach aussen geschoben.

In eingeschobenem Zustand kommt die konische Vertiefung 14 des Verriegelungsbolzens 13 gegenüber der Öffnung, d. h. dem Durchgang 6 im Gehäuse 20 des Montageelements 2 zu liegen. Der Sicherungsstift 15 wird durch die mit einem Gewinde versehene Öffnung 6 hindurch ins Gehäuse 20 eingeschraubt. Im vorderen Bereich weist der Sicherungsstift 15 ein Aussengewinde auf, das mit dem Innengewinde in der Öffnung 6 zusammenwirkt.

Beim Einschrauben des Sicherungsstifts 15 ins Gehäuse 20 kommt die Spitze des Stifts 15 an der Schräge der konischen Vertiefung 14 zu liegen und gleitet an dieser ab. Dabei übt der Sicherungsstift 15 eine Kraft in Richtung der Längsachse des Montageelements 2 aus. Dadurch wird der Verriegelungsbolzen 13 in das Montageelement 2 hineingezogen und dort gesichert. In der Verriegelungsposition ist das Montageelement 2 fest mit der Sanitärvorrichtung 1 verbunden. Die Abschlussfläche 10 der Sanitärvorrichtung wird gegen die Wand 11 gezogen, bzw. gepresst, so dass die Sanitärvorrichtung 1 sicher an der Wand 11 freitragend befestigt ist.

Sobald der Sicherungsstift 15 in die Vertiefung 14 des Verriegelungsbolzens 13 eingreift, ist das Montageelement 2 gegen Verdrehen blockiert. Ebenso ist das Verriegelungsteil 4 gegen Verdrehen gegenüber dem Gehäuse 20 und gegenüber der Sanitärvorrichtung 1 blockiert. Der Sicherungsstift 15 dient somit auch als Verdrehsicherung für das Montageelement 2 relativ zur Sanitärvorrichtung 1 und sorgt für eine sichere Fixierung des Montageelements in der Durchgangsöffnung 7 der Befestigungswand 9 der Sanitärvorrichtung.

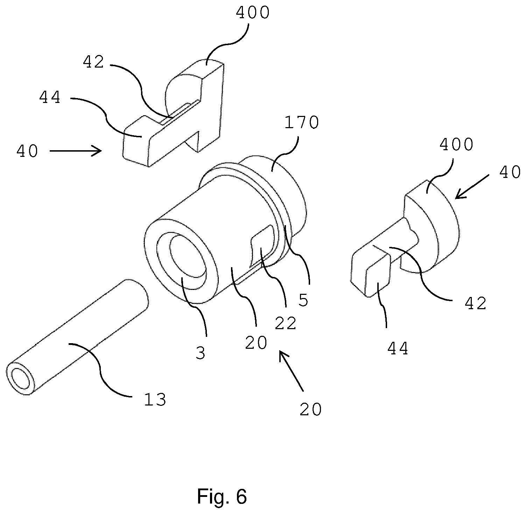

In **Fig.** 6 sind die Bestandsteile des Montageelements 2 in nicht zusammengesetztem Zustand gezeigt: Gehäuse 20, zwei Elementhälften 40 des Verriegelungsteils 4, Sicherungsbolzen 13. Sämtliche Bestandsteile sind individuelle, separate Teile. Sie können voneinander lösbar zusammengesetzt werden.

Das hohlzylindrische Gehäuse 20 mit konischem Aufnahmebereich 3 an seinem distalen Ende weist um den Aussenumfang des Gehäuses 20 einen umlaufenden Axialanschlag 5 auf. In der Seitenwand des Gehäuses 20 sind zwei Lösedurchgänge 22 zur Aufnahme der Löseelemente 44 der Elementhälften 40 eingebracht. Die zwei Lösedurchgänge 22 sind sich gegenüberliegend im Gehäuse 20 eingebracht.

Am proximalen Ende des Gehäuses 20 ist ein zylindrischer Gehäuseabschnitt 170 vorgesehen. Der Gehäuseabschnitt bildet einen Zwischenraum 17 zur Aufnahme des Rands einer Durchgangsöffnung 7 in einer Befestigungswand 9 der Sanitärvorrichtung.

Die beiden Elementhälften 40 des Verriegelungsteils 4 sind im wesentlichen symmetrisch entlang einer Längsachse ausgebildet. Eine Elementhälfte 40 weist ein Verriegelungselement 400 und ein Löseelement 44 auf. Verriegelungselement 400 und Löseelement 44 bilden gegenüberliegende Enden der Elementhälften 40. Verriegelungselement 400 und Löseelement 44 sind über einen Steg 42 miteinander verbundenen. Das Verriegelungselement 400 einer Elementhälfte 40 hat die Form einer Hälfte einer Halbscheibe. Beide Verriegelungselemente 400 der beiden Elementhälften 40 bilden eine Scheibe. Der Durchmesser der Scheibe entspricht dem Aussendurchmesser des Gehäuses 20.

Die Löseelemente 44 sind als radial vorstehende Vorsprünge gestaltet. Die Löseelementen 44 sind vorzugsweise formschlüssig mit den Lösedurchgängen 22 und in diese einführbar und daraus wieder entfernbar. Die radiale Ausdehnung eines Löseelements 44 ist vorzugsweise so gewählt, dass das Löseelement 44 in montiertem Zustand und in der Verriegelungsposition nicht oder nur wenig, beispielweise maximal 10 Prozent über den Umfang des Gehäuses 20 vorragt. Ein distales Ende der Löseelemente 44 ist leicht konisch ausgebildet und nach aussen aufgeweitet, um den Sicherungsbolzen 13 beim Einführen ins Gehäuse 20 zu führen und dessen Einführung zu erleichtern.

Der zylindrische Sicherungsbolzen 13 weist einen konstanten Aussendurchmesser auf. Seine Länge entspricht im wesentlichen der Länge des Gehäuses 20. Der Sicherungsbolzen 13 kann auch über die Enden des Gehäuses 20 vorstehen. Insbesondere ein Vorstehen über ein distales Ende des Gehäuses 20 kann je nach Art der Montage des Befestigungssystems an einer Wand vorteilhaft sein.

## Patentansprüche

1. Befestigungssystem zur Wandmontage von Sanitärvorrichtungen umfassend
ein Montageelement (2) zum Einbringen in eine Befestigungswand (9) der Sanitärvorrichtung (1), wobei das Montageelement an einem distalen Ende einen Aufnahmebereich (3) aufweist;
einen Verriegelungsbolzen (13) zur Aufnahme im Aufnahmebereich des Montageelements, und
einen Sicherungsstift (15), der in Wirkverbindung mit dem Bolzen (13) steht und diesen im Montageelement sichert,
wobei
das Montageelement ein hohlzylindrisches Gehäuse (20) und ein darin eingebrachtes Verriegelungsteil (4) umfasst, **dadurch gekennzeichnet, dass** das Verriegelungsteil derart relativ zum Gehäuse bewegbar angeordnet ist, dass das Verriegelungsteil (4) von einer ersten Einführposition des Montageelements (2) in eine zweite Verriegelungsposition des Montageelements bewegbar ist, wobei in der Einführposition ein Aussenumfang eines Verriegelungselements (400) des Verriegelungsteils (4) radial nicht über einen Aussenumfang des Gehäuses (20) vorsteht, und wobei in der Verriegelungsposition ein Aussenumfang des Verriegelungselements des Verriegelungsteils (4) radial über den Aussenumfang des Gehäuses (20) vorsteht.

2. Befestigungssystem nach Anspruch 1, wobei das Verriegelungsteil (4) zwei separate, vorzugsweise symmetrische, Halbelemente (40) aufweist.

3. Befestigungssystem nach einem der vorhergehenden Ansprüche, wobei das Verriegelungsteil (4) länglich ausgebildet ist und das Verriegelungselement (400) ein proximales Ende des Verriegelungsteils bildet.

4. Befestigungssystem nach einem der vorhergehenden Ansprüche, wobei das Gehäuse (20) einen radial nach aussen weisenden Axialanschlag (5) aufweist.

5. Befestigungssystem nach Anspruch 4, wobei der Axialanschlag (5) eine elastisch ausgebildete Schürze um den Aussenumfang des Gehäuses (20) ist, oder eine elastisch ausgebildete Schürze aufweist.

6. Befestigungssystem nach einem der Ansprüche 4 oder 5, wobei das Verriegelungselement (400) an einem proximalen Ende des Gehäuses (20) angeordnet ist und der Axialanschlag (5) beabstandet zum Verriegelungselement angeordnet ist.

7. Befestigungssystem nach einem der vorhergehenden Ansprüche, wobei das Montagelement (2) ein Löseelement (44) aufweist, welches derart ausgestaltet und angeordnet ist, um ein Verschieben des Verriegelungsteils (4) von der Verriegelungsposition in eine Einführposition zu ermöglichen.

8. Verfahren zur Montage einer Sanitärvorrichtung (1) an einer Wand (11) mit einem Befestigungssystem gemäss einem der vorhergehenden Ansprüche, aufweisend:
- in einer Einführrichtung, Einführen eines Montagelements (2) in einer Einführposition des Montageelements in eine Durchgangsöffnung (7) einer Befestigungswand (9) der Sanitärvorrichtung bis zu einer Anschlagsposition des Montageelements an einer Befestigungsfläche (90) der Befestigungswand;
- radial nach aussen Bewegen eines im Montageelement (2) angeordneten Verriegelungsteils (4) derart, dass ein Verriegelungselement (400) des Verriegelungsteils an einer gegenüberliegenden Befestigungsfläche (91) der Befestigungswand (9) zu liegen kommt, dabei Bilden eines Axialanschlags (5) in Ausführrichtung des Montageelements (2) derart, dass das Montageelement relativ zur Sanitärvorrichtung (1) axial blockiert wird.

9. Verfahren nach Anspruch 8, wobei das radial nach aussen Bewegen des Verriegelungselements (400) durch Einführen eines Verriegelungsbolzens (13) in eine distale Aufnahmeöffnung (3) des Montageelements (2) ausgelöst wird.

10. Verfahren nach einem der Ansprüche 8 oder 9, wobei das Verfahren zum Lösen des montierten Montageelements (2) von der Sanitärvorrichtung (1) weiter aufweist:
- Betätigen eines Löseelements (44) des Montageelements (2), dabei radial nach innen Bewegen des Verrieglungsteils (4) bis zur Einführposition des Montageelements, dabei Lösen der Verriegelung des Montageelements an der Befestigungswand (9) der Sanitärvorrichtung (1);
- Ausführen des Montageelements (2) aus der Öffnung in der Befestigungswand (9) der Sanitärvorrichtung (1) entgegen der Einführrichtung.

## Claims

1. Mounting system for wall mounting of sanitary devices comprising
a mounting element (2) for insertion into a fastening wall (9) of the sanitary device (1), wherein the mounting element comprises a receiving section (3) at a distal end;
a locking bolt (13) for reception in the receiving section of the mounting element, and
a safety pin (15) operatively connected to and securing the bolt (13) in the mounting element,
wherein
the mounting element comprises a hollow-cylindrical housing (20) and a locking member (4) accommodated therein, **characterized in that** the locking member is arranged movably relative to the housing in such a way that the locking member (4) is movable from a first insertion position of the mounting element (2) into a second locking position of the mounting element, wherein in the insertion position an outer periphery of a locking element (400) of the locking member (4) does not project radially beyond an outer periphery of the housing (20), and wherein in the locking position an outer periphery of the locking element of the locking member (4) projects radially beyond the outer periphery of the housing (20).

2. Mounting system according to claim 1, wherein the locking member (4) comprises two separate, preferably symmetric, half elements (40).

3. Mounting system according to any one of the preceding claims, wherein the locking member (4) is elongated and the locking element (400) forms a proximal end of the locking member.

4. Mounting system according to any one of the preceding claims, wherein the housing (20) comprises a radially outwardly facing axial stop (5).

5. Mounting system according to claim 4, wherein the axial stop (5) is an elastically formed skirt around the outer circumference of the housing (20), or comprises an elastically formed skirt.

6. Mounting system according to any one of claims 4 or 5, wherein the locking element (400) is arranged at a proximal end of the housing (20) and the axial stop (5) is arranged distanced to the locking element.

7. Mounting system according to any one of the preceding claims, wherein the mounting element (2) comprises a release member (44) configured and arranged to allow displacement of the locking member (4) from the locking position to an insertion position.

8. Method for mounting a sanitary device (1) on a wall (11) with a mounting system according to any one of the preceding claims, comprising:
- in an insertion direction, inserting a mounting element (2) in an insertion position of the mounting element in a through opening (7) of a fastening wall (9) of the sanitary device up to a stop position of the mounting element on a fastening surface (90) of the fastening wall;
- moving a locking member (4) arranged in the mounting element (2) radially outwards in such a way that a locking element (400) of the locking member comes to rest on an opposite fastening surface (91) of the fastening wall (9), thereby forming an axial stop (5) in the direction of removal of the mounting element (2) in such a way that the mounting element is blocked axially relative to the sanitary device (1).

9. Method according to claim 8, wherein the radially outward movement of the locking element (400) is triggered by insertion of a locking bolt (13) into a distal receiving opening (3) of the mounting element (2).

10. Method according to any one of claims 8 or 9, wherein the method for releasing the mounted mounting element (2) from the sanitary device (1) further comprises:
- actuating a release member (44) of the mounting element (2), thereby moving the locking member (4) radially inwards to the insertion position of the mounting element, thereby releasing the locking of the mounting element from the fastening wall (9) of the sanitary device (1);
- removing the mounting element (2) from the opening in the fastening wall (9) of the sanitary device (1) against the direction of insertion.

## Revendications

1. Système de fixation pour fixer des dispositifs sanitaires à un mur comprenant :
- un élément de fixation (2) pour être inséré dans une paroi de fixation (9) du dispositif sanitaire (1), l'élément de fixation comprenant une partie réceptrice (3) à son extrémité distale,
- une vis de verrouillage (13) destinée à être reçue dans la partie de réception de l'élément de fixation, et
- une broche de sécurité (15) coopérant avec la vis (13) et bloquant celle-ci dans l'élément de fixation,
l'élément de fixation comprenant un corps cylindrique creux (20) et un organe de verrouillage (4) logé dans celui-ci,
**caractérisé en ce que**
l'élément de verrouillage est monté mobile par rapport au corps de façon que l'organe de verrouillage (4) soit mobile entre une première position d'insertion de l'élément de fixation (2) jusque dans une seconde position de verrouillage de l'élément de fixation,
en position d'insertion la périphérie extérieure de l'élément de blocage (400) de l'organe de blocage (4) ne vient pas radialement en saillie au-delà de la périphérie extérieure du corps (20), et
en position de verrouillage la périphérie extérieure de l'élément de verrouillage de l'organe de verrouillage (4) vient radialement en saillie au-delà de la périphérie extérieure du corps (20).

2. Système de fixation selon la revendication 1, dans lequel l'organe de verrouillage (4) comprend deux demi-éléments (40) distincts, de préférence symétriques.

3. Système de fixation selon l'une quelconque des revendications précédentes, dans lequel l'organe de verrouillage (4) est allongé et l'élément de verrouillage (400) forme une extrémité proximale de l'organe de verrouillage.

4. Système de fixation selon l'une quelconque des revendications précédentes, dans lequel le corps (20) a une butée axiale (5) orientée radialement vers l'extérieur.

5. Système de fixation selon la revendication 4, dans lequel la butée axiale (5) est une jupe formée élastique autour de la périphérie extérieure du corps (20) ou comporte une jupe formée élastique.

6. Système de fixation selon l'une quelconque des revendications 4 ou 5, dans lequel l'élément de verrouillage (400) est situé à l'extrémité proximale du corps (20) et la butée axiale (5) est située à une distance de l'élément de verrouillage.

7. Système de fixation selon l'une quelconque des revendications précédentes, dans lequel l'élément de fixation (2) comporte un organe de libération (44) configuré et organisé pour permettre le déplacement de l'organe de verrouillage (4) de sa position de verrouillage à une position d'insertion.

8. Procédé de fixation d'un dispositif sanitaire (1) à un mur (11) avec un système de fixation selon l'une quelconque des revendications précédentes, consistant à :
- insérer dans la direction d'insertion un élément de fixation (2) dans une position d'insertion de l'élément de fixation dans un orifice traversant (7) d'une paroi de fixation (9) du dispositif sanitaire jusqu'à une position d'arrêt de l'élément de fixation à une surface de fixation (90) de la paroi de fixation,
- déplacer un organe de verrouillage (4) prévu dans l'élément de fixation (2) radialement vers l'extérieur de façon qu' un élément de verrouillage (400) de l'organe de verrouillage vienne contre une surface de fixation (91) opposée de la paroi de fixation (9), formant ainsi une butée axiale (5) dans la direction d'enlèvement de l'élément de fixation (2) de façon que l'élément de fixation soit bloqué axialement par rapport au dispositif sanitaire (1).

9. Procédé selon la revendication 8, selon lequel le mouvement radialement à l'extérieur de l'élément de verrouillage (400) est déclenché par l'insertion d'une vis de verrouillage (13) dans un orifice récepteur distal (3) de l'élément de fixation (2).

10. Procédé selon l'une quelconque des revendications 8 ou 9, dans lequel le procédé de libération de l'élément de fixation (2) en position fixée par rapport au dispositif sanitaire (1) consiste en outre à :
- actionner un élément de libération (44) de l'élément de fixation (2) en déplaçant ainsi l'organe de verrouillage (4) radialement vers l'intérieur vers la position d'insertion de l'élément de fixation en libérant ainsi le verrouillage de l'élément de fixation par rapport à la paroi de fixation (9) du dispositif sanitaire (1), et
- enlever l'élément de fixation (2) de l'orifice dans la paroi de fixation (9) du dispositif sanitaire (1) en agissant contre la direction d'insertion.
